# EUROPEAN PATENT APPLICATION

(11) **EP 2 410 171 A1**
(43) Date of publication of application: **25.01.2012**
(21) Application number: 10170630.7
(22) Date of filing: 23.07.2010
(51) Int. Cl.: F03D 1/06

(54) **Wind turbine having a rotor with hub**

(71) Applicant: EWT IP B.V., 3821 AA Amersfoort (NL)
(72) Inventor: van den Brink, Alfred, 3771 RN, Barneveld (NL)
(74) Representative: van Westenbrugge, Andries

(57) **Abstract**

Wind turbine comprising a rotor (1) having at least two radially extending rotor blades (2), and a hub (3) positioned at the center of the at least two radially extending rotor blades (2). The wind turbine further comprises a flow surface (4) for each rotor blade (2) of the wind turbine rotor (1) attached to the hub (3), each flow surface (4) being arranged to direct flow of air from a center part of the rotor (1) towards an associated rotor blade (2). Each flow surface (4) extends in a radial direction beyond a root attachment (5) of the associated rotor blade (2).

## Description

### Field of the invention

The present invention relates to a wind turbine comprising a rotor having at least two radially extending rotor blades, and a hub positioned at the center of the at least two radially extending rotor blades.

### Prior art

International patent publication W02003/104646 discloses a wind turbine having a three bladed rotor and a rotor hub, wherein a blade form part is attached fixedly to an outer surface of the rotor hub, the blade form part not being an integral section of the rotor blade itself. The profile of the blade form part is essentially the same as the profile of the rotor blade near the blade root, thus forming an enlarged rotor surface at one specific pitch position of the rotor blade. However, this rotor design still necessitates the use of a large rotor hub, of which a large part of the frontal surface cannot be used for using the wind energy.

### Summary of the invention

The present invention seeks to provide an improvement in efficiency of a rotor blade construction of a wind turbine.

According to the present invention, a wind turbine according to the preamble defined above is provided, wherein the wind turbine further comprises a flow surface for each rotor blade of the wind turbine rotor attached to the hub, each flow surface being arranged to direct flow of air from a center part of the rotor towards an associated rotor blade, and each flow surface extending in a radial direction beyond a root attachment of the associated rotor blade. The combination of flow surfaces forms a set of skirts, which cover a center part of the rotor surface (i.e. πr² where r is the rotor radius). Thereby, the wind conversion efficiency of the wind turbine is enhanced.

In a further embodiment, each flow surface overlaps at least part of the wing shape of the rotor blade. In general, rotor blades of wind turbines have a wing shape along a large part of the rotor blade, but this transitions into a circular shape near the rotor hub, in order to allow attachment of the rotor blade to the hub, and to allow a pitching mechanism in the rotor hub to connect to each rotor blade. By designing the flow surfaces to overlap at least part of the wing shape, a larger part wind reaching the center part of the rotor surface is deflected towards parts of the rotor blades which efficiently transform the wind energy into rotation of the rotor. In an exemplary embodiment, each flow surface extends in a radial direction over a distance which is equal to or greater than 1% of a rotor blade length. The rotor blade length is somewhat smaller than the radius of the wind turbine rotor, as a result of the attachment of the rotor blades to the hub. The present invention embodiments are e.g. applied in direct drive wind turbines, wherein the hub is attached to a rotor part of a direct drive wind turbine generator. As the rotor part of the generator is in general larger for direct drive wind turbines, attachment of the flow surfaces is easier to accomplish.

In a further embodiment each flow surface is attached to the rotor part using a stub element attached to an outer section of the rotor part. The larger diameter of the rotor part allows to provide a strong and efficient structure for attaching the flow surfaces to the hub of the wind turbine.

Each flow surface is moveably connected to the associated rotor blade in a further embodiment. This allows normal pitching of the rotor blade, and keeps the flow surfaces correctly positioned to work effectively. Each flow surface is e.g. connected to the associated rotor blade using a sliding mechanism, which keeps the outer part of the flow surface at a fixed distance from the rotor blade. In an alternative embodiment, each flow surface is connected to the associated rotor blade using a roller mechanism. This embodiment would allow a more easy pitching motion of the rotor blade with respect to the stationary position of the flow surface. In an even further embodiment, each flow surface is connected to the associated rotor blade using a magnetic bearing mechanism, e.g. using magnets or magnetized areas in the flow surface attachment towards the rotor blade, and a steel strip in the rotor blade. This would allow a robust and reliable attachment between flow surface and rotor blade, even in the case of gusty winds or strongly varying wind directions.

In an even further embodiment, each flow surface is connected to the associated rotor blade using a flexible construction attached to the rotor blade. E.g. a material is used for the flow surfaces with sufficient flexibility in order to allow pitching operation of the associated rotor blade during operation. This would reduce the (frontal) surface area of the flow surface when moving the rotor blades towards vane position and consequently reduce loads resulting from high wind speeds.

In a further embodiment, each flow surface is a curved surface. The curved surface is adapted to be effective at a nominal rotor speed, in order to provide an efficiency increase of the wind turbine at nominal operating conditions. In a further embodiment, each flow surface extends the effective cord length of the rotor blade near the root of the rotor blade, thus aiding in using more of the wind energy for transformation into rotation of the wind turbine rotor (and hence producing more electrical energy).

Each flow surface is made of a material having a predetermined degree of flexibility in a further embodiment. The flexing of the flow surface allows the wind turbine to better withstand gusts of wind. Furthermore, the flexibility of the flow surface may aid in guiding the wind efficiently depending on wind force.

In a further group of embodiments, each flow surface is a rotor blade shaped surface having a radius shorter than the radius of the rotor, wherein each rotor blade shaped surface is positioned in between rotor blades. This double rotor blade design is another form of improvement to existing wind turbine rotor designs which increases efficiency of the wind turbine. In a further embodiment, each rotor blade shaped surface is attached to the hub using a secondary pitching mechanism. The pitch capability of the additional blades (flow surfaces) allows to position these in the most efficient manner depending on the actual operational parameters of the wind turbine.

### Short description of drawings

The present invention will be discussed in more detail below, using a number of exemplary embodiments, with reference to the attached drawings, in which
Fig. 1a-c depict a part of a wind turbine in a perspective view of a first embodiment of the present invention;
Fig. 2a-c depict a part of a wind turbine in a perspective view of a second embodiment of the present invention;

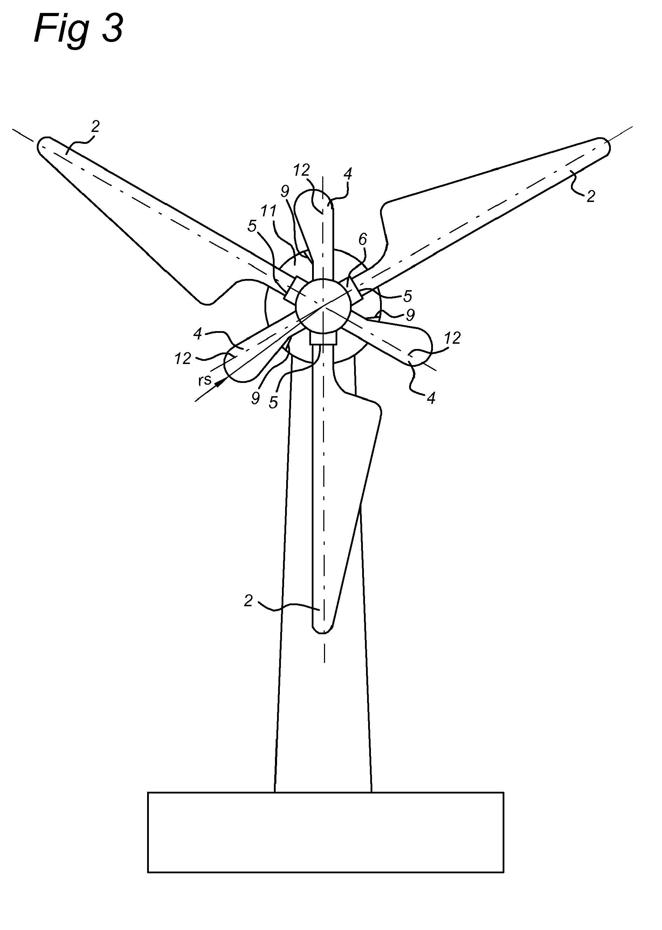

Fig. 3 depicts a frontal view of a rotor of a wind turbine, in which a third embodiment of the present invention is used.

### Detailed description of exemplary embodiments

Present day rotor systems of wind turbines use separate rotor blades which are mounted on a rotor hub, mainly due to reasons of transportability and constructional limitations. In general this results in a less efficient operation of the wind turbine due to the fact that not all wind energy reaching the rotor surface is efficiently used to generate motion of the generator of the wind turbine. Efforts have been made in the past, and are being proposed in new wind turbine designs, however, with only limited results. The present invention embodiments use a particular solution which effectively enlarges the efficient use of the total frontal area of the rotor diameter.

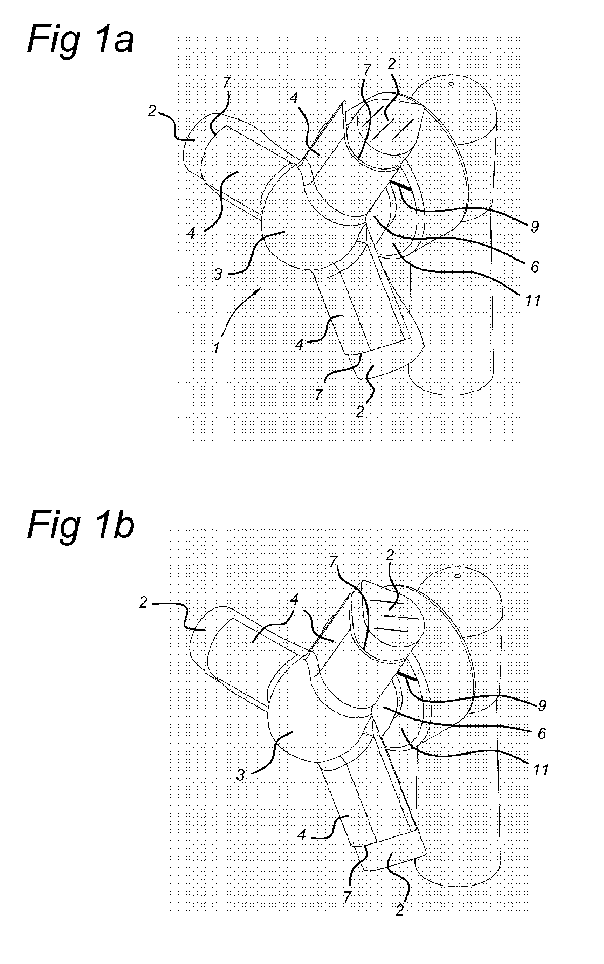

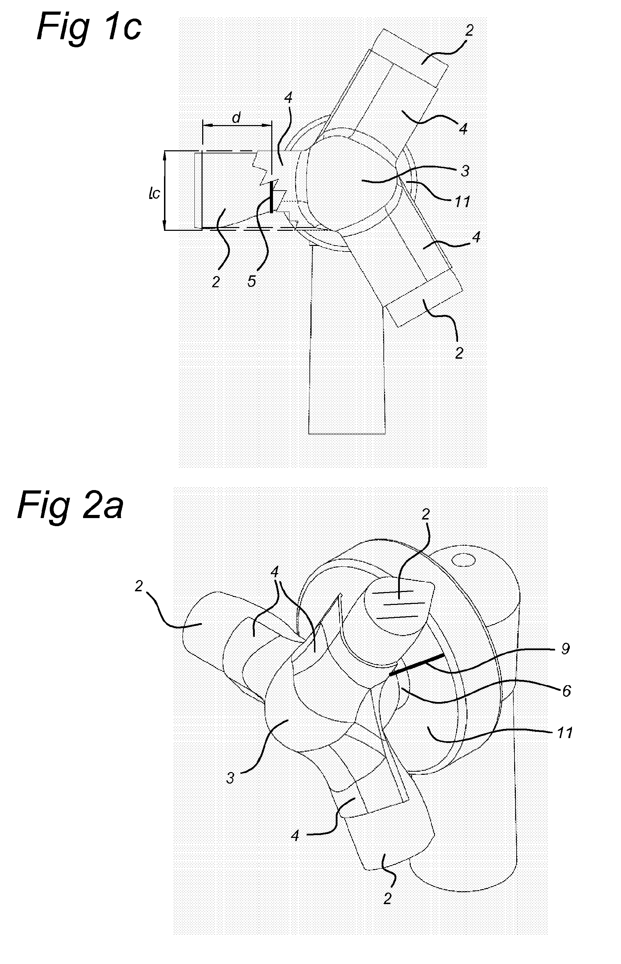

In Fig. 1 a part of a wind turbine is shown in a perspective view of a first embodiment of the present invention. Fig. 1a show a perspective view of the wind turbine where the rotor blades 2 are in feathering position, and Fig. 1b the same perspective view when the rotor blades 2 are pitched to an operational position. Fig. 1c shows a frontal view of the wind turbine, where a part of one of the flow surfaces 4 (see description below) is drawn in phantom lines. The rotor 1 of the wind turbine comprises at least two rotor blades 2, which extend in a radial direction of the rotor 1. In the embodiment shown three rotor blades 2 are provided. The rotor blades 2 are attached to a rotor hub 6 at a root attachment 5 of each rotor blade 2. The attachment at the root location 5 allows to pitch the rotor blades 2 depending on operational parameters of the wind turbine. The attachment at the root location 5 usually also means that the blade shape of the rotor blade cannot be extended all the way up to the root attachment 5 (see Fig. 1c).

According to the present invention, a hub 3 or nose wing is provided at the center of the at least two radially extending rotor blades 2. The hub 3 comprises as many flow surfaces 4 as rotor blades 2 are present, in the embodiment shown three flow surfaces 4. The flow surfaces 4 are connected to each other to form an assembly of skirt like surfaces, which in operation provides a single assembly which captures wind in a limited radius around the rotor center. For this, each flow surface 4 is arranged to direct flow of air from a center part of the rotor towards the associated rotor blade 2. Each flow surface 4 extends in a radial direction beyond the root attachment 5 of the rotor blade 2 to the rotor hub 6. The set of flow surfaces 4 thus covers at least a minimal a center part of the rotor surface (i.e. a part of πr² m², r being the radius of the rotor 1). In other words, each flow surface 4 overlaps at least part of the wing shape of the associated rotor blade 2, i.e. well beyond the root attachment 5 seen in an axial direction of the rotor 1.

It is noted that the root attachment 5 of present day wind turbines may be fitted with covers which protect the rotating elements of the pitch mechanism of a rotor blade. Such covers in general are fitted around the entire root attachment 5 in order to prevent ingress of water and dirt, and are in no way designed to direct air flow from the center part of the rotor surface towards the rotor blades, for which effect the present embodiments of the flow surfaces 4 are designed.

In a further embodiment, an example of which is shown in the drawing of Fig. 1, each flow surface 4 extends in a radial direction over a distance which is equal to or greater than 1% of a rotor blade length (the rotor blade length being defined as the longest dimension of the rotor blade 2 measured from the root attachment 5, i.e. somewhat smaller than the radius of wind turbine rotor 1). This effectively covers the region of the rotor blade 2 from the center to beyond the root attachment 5, and thus provides additional capability to catch wind energy and convert this energy into motion of the rotor 1.

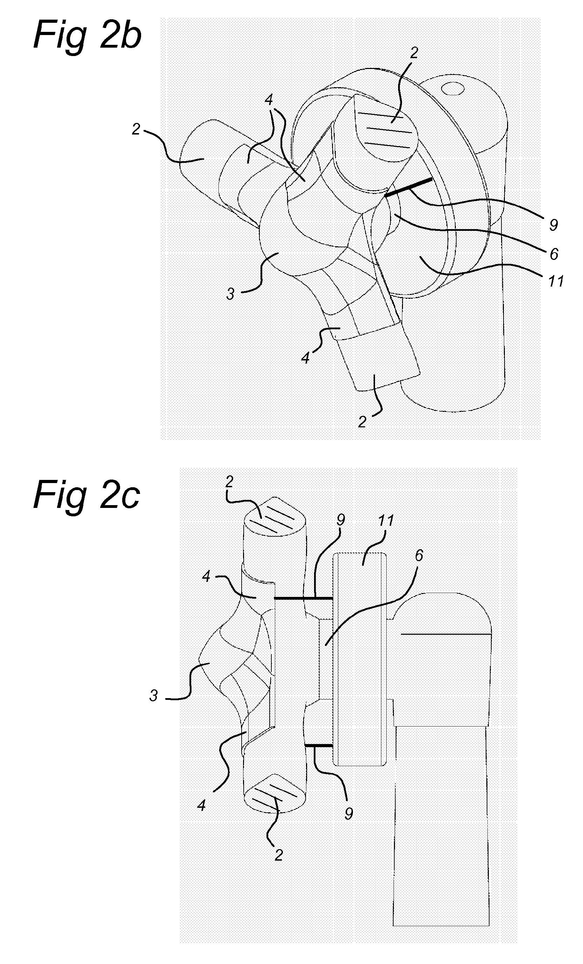

Each flow surface 4 is a curved surface, in which the curvature is determined to provide an aerodynamically suitable surface, which forms a combination of effective surface for converting wind energy into rotor motion, and guidance of the air flow towards the more aerodynamically efficient parts of each rotor blade 2. The surface is adapted to be effective at a nominal rotor speed range of the wind turbine as a whole. This provides the additional advantage that energy conversion efficiency is improved in a wind speed range which is mostly available in operation. In the perspective views of Fig. 2a and b, and the side view of Fig. 2c, an embodiment is shown wherein the flow surfaces 4 have an alternative shape compared to the embodiment of Fig. 1a-c

The shape of the flow surface 4 can be adapted to extend the effective cord length l_{c} of the rotor blade 2 near the root of the rotor blade 2 in further embodiments (see Fig. 1c). This further extends the efficiency of energy conversion of the wind turbine.

The present invention embodiments can be used in various types of wind turbines. In one group of embodiments, the hub 3 with the flow surfaces 4 is attached to a hub 6 of the rotor 1, or more in general to an element of the wind turbine fixedly connected to an axis of the rotor 1. The attachment can be made using various attachment mechanisms, e.g. using stubs or other light weight attachment assemblies.

In a further group of embodiments, advantage can be taken of structural features of certain types of wind turbines, in this case of direct driven wind turbines. In such wind turbines, not only the elements directly connected to the rotor 1 can be used, but also the structural elements of the rotor part 11 of the generator of the wind turbine. In these embodiments, the hub 3 is attached to a rotor part 11 of a direct drive wind turbine generator. In a further embodiment, each flow surface 4 is attached to the rotor part 11 using a stub element 9 attached to an outer section of the rotor part (seen in radial direction of the rotor 1), as shown in the perspective vies of Fig. 1a-b and Fig. 2a-c). This allows to provide as much constructional stiffness as possible when connecting the flow surfaces 4 to the hub 3 of the wind turbine.

The flow surfaces 4 of the present invention embodiments are also supported at their remote end using a moveable connection to the associated rotor blade 2, to allow the pitching motion of the rotor blade 2. In one group of embodiments, each flow surface is connected to rotor blade using a sliding mechanism 7, as shown in general in Fig. 1. By using the proper materials and mechanism elements, this embodiment provides sufficient strength to keep the flow surfaces 4 in position for proper operation, while still allowing the rotor blades 2 to pitch.

In a further group of embodiments, each flow surface is connected to an associated rotor blade 2 using a roller mechanism 8. This would allow to obtain less friction between the attachment structure of the flow surface 4 and the surface of rotor blade 2.

In an even further embodiment, each flow surface 4 is connected to the associated rotor blade 2 using a magnetic bearing mechanism, comprising e.g. magnets on the flow surfaces, and a steel strip on the rotor blade 2.

The flow surfaces 4 are made from a material having a predetermined degree of flexibility. When winds are very strong, or gusty, this will effectively decrease the wind catching surface of the flow surfaces 4, as the wind is able to bend away the flow surface 4 as a result of which a less efficient surface is provided. The material can be any usual material used for making rotor blades, including metal, carbon fiber or glass fiber based materials. The actual shape and thickness of the material used may then provide the desired degree of flexibility.

A further group of embodiments comprises the feature that each flow surface 4 is connected to the associated rotor blade 2 using a flexible construction attached to the rotor blade 2. The flow surfaces 4 are also attached in a fixed manner to the hub 3. As a material for the flow surfaces 4 a material is used with sufficient flexibility in order to allow pitching operation of the associated rotor blade 2 during operation. The flexible construction allows movement or shape change of the flow surface, and is e.g. a point attachment on the frontal wing part of the associated rotor blade 2. When the rotor blade 2 is in operational position, the flow surface 4 is stretched in this embodiment as a sail, and when the rotor blade 2 pitches to a vane position, the flow surface 4 is loosened. This would reduce the (frontal) surface area of the flow surface 4 when moving the rotor blades 2 towards vane position and consequently reduce loads resulting from high wind speeds.

An even further group of embodiments uses a slightly different structure to better and more efficiently use as much as possible wind catching surface of the rotor 1, by providing a hub 3 with flow surfaces 4 as part of the rotor 1, wherein each flow surface 4 is a rotor blade shaped surface having a radius rₛ shorter than the radius of the rotor 1, wherein each flow surface 4 is positioned in between rotor blades 2. Effectively, the hub 3 can be designed to effectively capture wind energy flowing at the center part of the rotor 1 wind catching surface. In a further embodiment of such a double bladed design, each rotor blade shaped surface 4 is attached to the hub using a secondary pitch mechanism 12. This allows the flow surfaces to be controlled in pitch, end hence in effectiveness in catching additional wind energy. The secondary pitch mechanism might also be fitted with additional elements (e.g. friction dampers) to allow the wind force itself to change the pitch of the rotor blade shaped surfaces 4, e.g. when gusts occur. As a consequence of the automatic pitch regulation during gusty wind conditions, less force will be exerted on the wind turbine as a whole, allowing to make the design of the wind turbine more cost-effective.

The present invention embodiments have been described above with reference to a number of exemplary embodiments as shown in the drawings. Modifications and alternative implementations of some parts or elements are possible, and are included in the scope of protection as defined in the appended claims.

## Claims

1. Wind turbine comprising a rotor (1) having at least two radially extending rotor blades (2), and a hub (3) positioned at the center of the at least two radially extending rotor blades (2),
further comprising a flow surface (4) for each rotor blade (2) of the wind turbine rotor (1) attached to the hub (3), each flow surface (4) being arranged to direct flow of air from a center part of the rotor (1) towards an associated rotor blade (2), and
each flow surface (4) extending in a radial direction beyond a root attachment (5) of the associated rotor blade (2).

2. Wind turbine according to claim 1, wherein each flow surface (4) overlaps at least part of the wing shape of the rotor blade (2).

3. Wind turbine according to claim 1 or 2, wherein each flow surface (4) extends in a radial direction over a distance which is equal to or greater than 1% of a rotor blade length.

4. Wind turbine according to claim 1, 2 or 3, wherein the hub (3) is attached to a rotor part (11) of a direct drive wind turbine generator.

5. Wind turbine according to claim 4, wherein each flow surface (4) is attached to the rotor part (11) using a stub element (9) attached to an outer section of the rotor part (11).

6. Wind turbine according to any one of claims 1-5, wherein each flow surface (4) is moveably connected to the associated rotor blade (2).

7. Wind turbine according to claim 6, wherein each flow surface (4) is connected to the associated rotor blade (2) using a sliding mechanism (7).

8. Wind turbine according to claim 6, wherein each flow surface (4) is connected to the associated rotor blade (2) using a roller mechanism (8).

9. Wind turbine according to claim 6, wherein each flow surface (4) is connected to the associated rotor blade (2) using a magnetic bearing mechanism.

10. Wind turbine according to claim 6, wherein each flow surface (4) is connected to the associated rotor blade (2) using a flexible construction attached to the rotor blade (2).

11. Wind turbine according to any one of claims 1-10, wherein each flow surface (4) is a curved surface.

12. Wind turbine according to any one of claims 1-11, wherein each flow surface (4) extends the effective cord length (l_{c}) of the rotor blade (2) near the root of the rotor blade (2).

13. Wind turbine according to any one of claims 1-12, wherein each flow surface (4) is made of a material having a predetermined degree of flexibility.

14. Wind turbine according to any one of claims 1-13, wherein each flow surface (4) is a rotor blade shaped surface having a radius (rₛ) shorter than the radius of the rotor (1), wherein each rotor blade shaped surface (4) is positioned in between rotor blades (2).

15. Wind turbine according to claim 14, wherein each rotor blade shaped surface (4) is attached to the hub (3) using a secondary pitching mechanism (12).
